# EUROPEAN PATENT APPLICATION

(11) **EP 4 350 420 A1**
(43) Date of publication of application: **10.04.2024**
(21) Application number: 23814345.7
(22) Date of filing: 02.08.2023
(51) Int. Cl.: G02B 27/01, G02B 27/00, G02B 7/02

(54) **LENS ASSEMBLY INCLUDING LIGHT-EMITTING ELEMENT DISPOSED ON FIRST LENS, AND WEARABLE ELECTRONIC DEVICE INCLUDING SAME**

(30) Priority: 24.08.2022 KR 20220106107; 13.09.2022 KR 20220115083
(71) Applicant: Samsung Electronics Co., Ltd., Suwon-si, Gyeonggi-do 16677 (KR)
(72) Inventor: SONG, Doukyoung, Suwon-si Gyeonggi-do 16677 (KR); KIM, Youngran, Suwon-si Gyeonggi-do 16677 (KR); YANG, Hyunmo, Suwon-si Gyeonggi-do 16677 (KR)
(74) Representative: Arnold & Siedsma
(86) International application number: PCT/KR2023/011301
(87) International publication number: WO 2024/043564

(57) **Abstract**

A lens assembly includes a lens housing, a first lens connected to the lens housing, a second lens connected to the lens housing, a display connected to the lens housing, positioned forwardly compared to the second lens, and irradiating light in a direction toward the second lens, and a light-emitting element arranged on the first lens or the lens housing and positioned in a region where the light irradiated from the display does not reach. Other various embodiments are possible.

## Description

### BACKGROUND

### 1. Field

The disclosure relates to a wearable electronic device, for example, a lens assembly including a light-emitting element disposed on a first lens and a wearable electronic device including the same.

### 2. Description of Related Art

An electronic device with a user interface providing a user with an experience of augmented reality, virtual reality, mixed reality, and/or extended reality has been developed. The above description is information the inventor(s) acquired during the course of conceiving the present disclosure, or already possessed at the time, and is not necessarily art publicly known before the present application was filed.

### SUMMARY

According to an embodiment, a wearable electronic device worn on a head of a user includes a main housing and a pair of lens assemblies arranged in the main housing and respectively disposed in front of eyes of the user. The lens assembly includes a lens housing connected to the main housing, a first lens including a rear surface facing an eye of the user and a front surface provided on an opposite side of the rear surface, wherein the first lens is connected to the lens housing, a second lens positioned forwardly compared to the first lens and connected to the lens housing, a display connected to the lens housing, positioned forwardly compared to the second lens, and irradiating light in a direction toward the second lens, and at least one light-emitting element 570 arranged on at least one of the first lens and the lens housing, provided at a position overlapping a region where the light irradiated from the display does not reach in the first lens, and irradiating light to a pupil of the user to sense movement of the pupil of the user.

According to an embodiment, a lens assembly includes a lens housing, a first lens including a rear surface facing an eye of a user and a front surface provided on an opposite side of the rear surface, wherein the first lens is connected to the lens housing, a second lens positioned forwardly compared to the first lens and connected to the lens housing, a display connected to the lens housing, positioned forwardly compared to the second lens, and irradiating light in a direction toward the second lens, and at least one light-emitting element 570 arranged on at least one of the first lens and the lens housing, provided at a position overlapping a region where the light irradiated from the display does not reach in the first lens, and irradiating light to a pupil of the user to sense movement of the pupil of the user.

According to an embodiment, a wearable electronic device worn on a head of a user includes a main housing, and a pair of lens assemblies arranged in the main housing and respectively disposed in front of eyes of the user. The lens assembly includes a lens housing connected to the main housing, a first lens including a rear surface facing an eye of the user and a front surface provided on an opposite side of the rear surface, wherein the first lens is connected to the lens housing, a second lens connected to the lens housing, a display connected to the lens housing, positioned forwardly compared to the second lens, and irradiating light in a direction toward the second lens, and at least one light-emitting element 570 arranged on at least one of the first lens and the lens housing, provided at a position overlapping a region where the light irradiated from the display does not reach in the first lens, and irradiating light to a pupil of the user to sense movement of the pupil of the user. The rear surface includes a central part that is a region through which the light passes, and an edge part positioned at an outer side of the central part and supporting the light-emitting element.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
The above and other aspects, features, and advantages of certain embodiments of the present disclosure will become apparent from the following detailed description with reference to the accompanying drawings, in which:
FIG. 1 is a block diagram of an electronic device in a network environment according to one embodiment;
FIG. 2 is a view illustrating a structure of a wearable electronic device according to an embodiment;
FIG. 3 is a diagram illustrating an operation of an eye tracking camera included in a wearable electronic device according to an embodiment;
FIG. 4 is a front perspective view of a wearable electronic device according to an embodiment;
FIG. 5 is a rear perspective view of a wearable electronic device according to an embodiment;
FIG. 6 is a rear perspective view of a lens assembly according to an embodiment;
FIG. 7 is an exploded perspective view of the lens assembly according to an embodiment;
FIG. 8 is a cross-sectional view taken along a line A-A of FIG. 6;
FIG. 9 is a rear view of a first lens, a lens housing, and a light-emitting element according to an embodiment;
FIG. 10 is a cross-sectional view of a lens assembly according to an embodiment; and
FIG. 11 is a rear view of a first lens, a lens housing, and a light-emitting element according to an embodiment.

### DETAILED DESCRIPTION

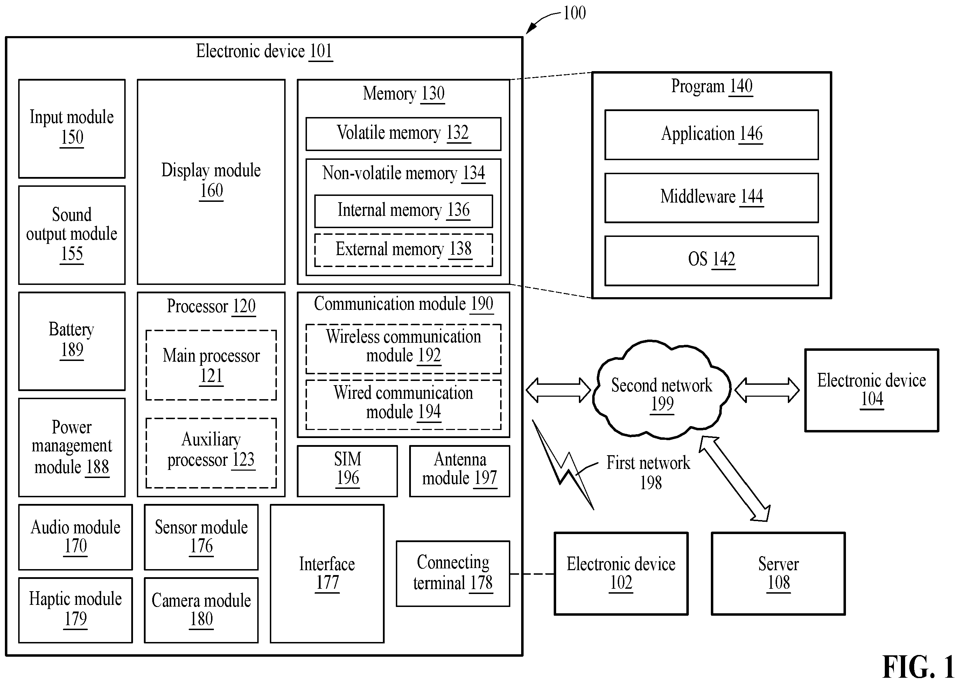

FIG. 1 is a block diagram of an electronic device in a network environment according to one embodiment.

Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to one embodiment, the electronic device 101 may communicate with the electronic device 104 via the server 108. According to one embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to one embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a nonvolatile memory 134. According to one embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to one embodiment, the auxiliary processor 123 (e.g., an ISP or a CP) may be implemented as a portion of another component (e.g., the camera module 180 or the communication module 190) that is functionally related to the auxiliary processor 123. According to one embodiment, the auxiliary processor 123 (e.g., an NPU) may include a hardware structure specified for artificial intelligence (AI) model processing. An AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to one embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to one embodiment, the display device 160 may include a touch sensor adapted to sense a touch, or a pressure sensor adapted to measure an intensity of a force incurred by the touch.

The audio module 170 may convert a sound into an electric signal or vice versa. According to one embodiment, the audio module 170 may obtain the sound via the input device 150 or output the sound via the sound output device 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to one embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an example embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an example embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to one embodiment, the haptic module 179 may include, for example, a motor, a piezoelectric element, or an electric stimulator.

The camera module 180 may capture a still image and moving images. According to one embodiment, the camera module 180 may include one or more lenses, image sensors, ISPs, or flashes.

The power management module 188 may manage power supplied to the electronic device 101. According to one embodiment, the power management module 188 may be implemented as, for example, at least a part of a power management integrated circuit (PMIC).

The battery 189 may supply power to at least one component of the electronic device 101. According to one embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to one embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to one embodiment, the antenna module 197 may include an antenna including a radiating element including a conductive material or a conductive pattern formed in or on a substrate (e.g., a printed circuit board (PCB)). According to one embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to one embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to one embodiment, all or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the present disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st," "2nd," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the present disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments of the present disclosure as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the present disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same manner or in a similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

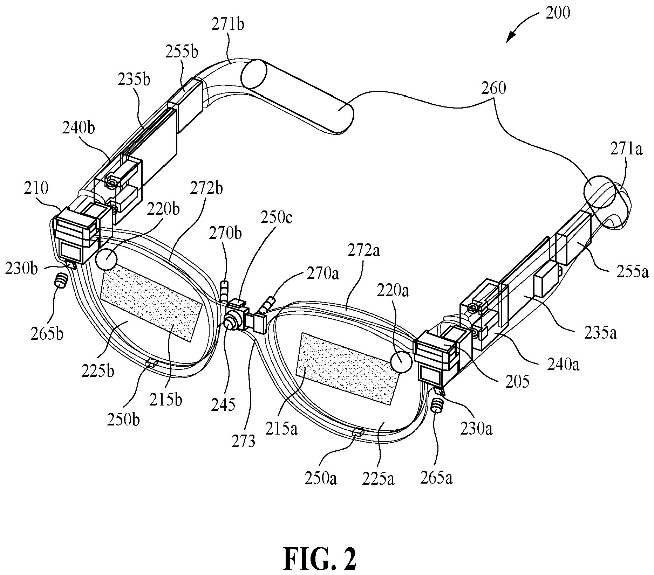

FIG. 2 is a view illustrating a structure of a wearable electronic device according to an embodiment.

Referring to FIG. 2, a wearable electronic device 200 (e.g., the electronic device 101 or 102 of FIG. 1) may be worn on the head of a user to provide the user with an image associated with an augmented reality (AR) service and/or a virtual reality (VR) service.

In an embodiment, the wearable electronic device 200 may include a first display 205, a second display 210, screen display portions 215a and 215b, input optical members 220a and 220b, a first transparent member 225a, a second transparent member 225b, lighting units 230a and 230b, a first board 235a, a second board 235b, a first hinge 240a, a second hinge 240b, an imaging camera 245, a plurality of microphones (e.g., a first microphone 250a, a second microphone 250b, and a third microphone 250c), a plurality of speakers (e.g., a first speaker 255a, and a second speaker 255b), a battery 260, a first recognition camera 265a, a second recognition camera 265b, a first eye detection camera 270a, a second eye detection camera 270b, temples 271a and 271b, rims 272a and 272b, and a bridge 273.

In an embodiment, a display (e.g., the first display 205 and the second display 210) may include, for example, a liquid crystal display (LCD), a digital mirror device (DMD), or a liquid crystal on silicon (LCoS), an organic light-emitting diode (OLED), a micro light-emitting diode (micro LED), or the like. Although not shown in the drawings, when the display 205, 210 is one of an LCD, a DMD, and an LCoS, the wearable electronic device 200 may include a light source configured to emit light to a screen output area of the display 205, 210. In an embodiment, when the display 205, 210 is capable of generating light by itself, for example, when the display 205, 210 is either an OLED or a micro-LED, the wearable electronic device 200 may provide a virtual image of relatively high quality to the user even though a separate light source is not included. For example, when the display 205, 210 is implemented as an OLED or a micro-LED, a light source may be unnecessary, and accordingly, the wearable electronic device 200 may be lightened. Hereinafter, the display 205, 210 capable of generating light by itself may be referred to as a "self-luminous display", and description will be made on the assumption of a self-luminous display.

The display 205, 210 according to various embodiments may include at least one micro-LED. For example, the micro-LED may express red (R), green (G), and blue (B) by emitting light by itself and because of its small size (e.g., less than or equal to 100 *µ*m), a single chip may implement a single pixel (e.g., one of R, G, and B). Accordingly, it may be possible to provide a high resolution without a backlight unit (BLU), when the display 205, 210 is implemented as a micro-LED. However, the example is not limited thereto. A single pixel may include R, G, and B and a single chip may be implemented by a plurality of pixels including R, G, and B. The display 205, 210 may also be referred to as a "light source".

In an embodiment, the display 205, 210 may include pixels for displaying a virtual image. The display 205, 210 may further include infrared pixels that emit infrared light.

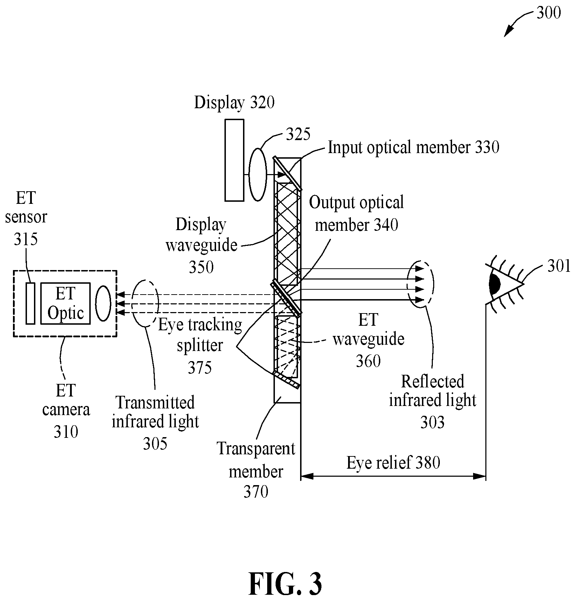

In an embodiment, the display 205, 210 may further include light-receiving pixels (e.g., photo sensor pixels) that are disposed between pixels and configured to receive light reflected from the eyes of a user, convert the received light to electrical energy, and output the electrical energy. A light-receiving pixel may be referred to as an "eye tracking sensor". The eye tracking sensor (e.g., an eye tracking sensor 315 of FIG. 3) may sense infrared light generated by reflecting light emitted by an infrared pixel included in the display 205, 210 by the eyes of a user.

The wearable electronic device 200 may detect a gaze direction (e.g., a movement of a pupil) of the user, using light receiving pixels 315. For example, the wearable electronic device 200 may detect and track a gaze direction of a left eye and a gaze direction of a right eye of the user through one or more light-receiving pixels 315 of the first display 205 and one or more light-receiving pixels 315 of the second display 210. The wearable electronic device 200 may also determine a central position of a virtual image according to the gaze directions of the left eye and the right eye of the user (e.g., directions in which pupils of the left eye and the right eye of the user gaze) detected through the one or more light-receiving pixels 315.

The wearable electronic device 200 may include the display 205, 210, the first transparent member 225a and/or the second transparent member 225b. A user may use the wearable electronic device 200 while wearing the wearable electronic device 200 on their face. According to an embodiment, the first transparent member 225a may be disposed to face the left eye of the user and the second transparent member 225b may be disposed to face the right eye of the user. According to various embodiments, when the display 205, 210 is transparent, the display 205, 210 may be disposed to face an eye of the user to configure the screen display portion 215a and 215b.

The first display 205 and the second display 210 may each include a first control circuit (not shown). The first control circuit may control the first display 205 or the second display 210. The first control circuit may control an operation of a liquid crystal element of a transparent cover (not shown) included in the first display 205 or the second display 210. In an embodiment, light emitted from the display 205, 210 may reach the screen display portion 215a formed on the first transparent member 225a that faces the left eye of the user and reach the screen display portion 215b formed on the second transparent member 225b that faces the right eye of the user, by passing through a lens (not shown) and a waveguide (e.g., a display waveguide 350 and an eye tracking waveguide 360 of FIG. 3).

The lens (not shown) may be disposed in front of the display 205, 210. The lens (not shown) may include a concave lens and/or a convex lens. For example, the lens (not shown) may include a projection lens (e.g., a projection lens 325 of FIG. 3), or a collimation lens (not shown).

In an embodiment, the light emitted from the display 205, 210 may be guided by the waveguides 350 and 360 through the input optical members 220a and 220b. Light traveling in the waveguides 350 and 360 may be guided toward the eyes of the user through an output optical member (e.g., an output optical member 340 of FIG. 3). The screen display portions 215a and 215b may be determined based on light emitted toward the eye of a user (e.g., an eye 301 of the user of FIG. 3).

For example, the light emitted from the display 205, 210 may be reflected from a grating area of the waveguides 350 and 360 formed in the input optical members 220a and 220b and the screen display portions 215a and 215b and may be transmitted to the eye 301 of the user.

In an embodiment, the screen display portions 215a and 215b or a transparent member (e.g., the first transparent member 225a, the second transparent member 225b) may include a reflective lens and a lens including the waveguides 350 and 360. The waveguides 350 and 360 may function to transmit a light source generated by the display 205, 210 to an eye of the user, and may be referred to as an "optical waveguide". Hereinafter, an "optical waveguide" or "waveguide" may correspond to the screen display portions 215a and 215b.

The screen display portions 215a and 215b may be a path through which external light is incident, totally reflected, and emitted and may be distinguished from the first transparent member 225a and the second transparent member 225b through which external light is simply reflected or transmitted.

In an embodiment, the screen display portions 215a and 215b may be formed of glass, plastic, or polymer and may have a nanopattern formed on one surface of the inside or outside, for example, a grating structure of a polygonal or curved shape. According to an embodiment, light incident to one end of the screen display portions 215a and 215b through the input optical members 220a and 220b may be propagated inside the display waveguide 350 by the nanopattern to be provided to the user. For example, the screen display portions 215a and 215b including a freeform prism may provide incident light to a user through a reflection mirror.

The screen display portions 215a and 215b may include at least one of a reflective element (e.g., a reflection mirror) and at least one diffractive element (e.g., a diffractive optical element (DOE) or a holographic optical element (HOE)). The screen display portions 215a and 215b may guide light emitted from a display (e.g., the first display 205 and the second display 210) to the eyes of the user, using the at least one diffractive element or the reflective element included in the screen display portions 215a and 215b.

According to various embodiments, the diffractive element may include the input optical members 220a and 220b and/or an output optical member (e.g., the output optical member 340 of FIG. 3). For example, the input optical members 220a and 220b may refer to an input grating area and the output optical member 340 may refer to an output grating area. The input grating area may function as an input terminal to diffract (or reflect) light output from the display 205, 210 (e.g., a micro LED) to transmit the light to the screen display portions 215a and 215b. The output grating area may function as an exit to diffract (or reflect) light transmitted to the waveguides 350 and 360 to the eye 301 of the user.

According to various embodiments, the reflective element may include a total reflection optical element or a total reflection waveguide for total internal reflection (TIR). For example, total reflection, which is one of the schemes of inducing light, may form an angle of incidence such that light (e.g., a virtual image) entering through an input grating area is completely or almost completely reflected from one portion (e.g., a specific surface) of the screen display portions 215a and 215b, to completely or almost completely transmit the light to an output grating area.

The first transparent member 225a and/or the second transparent member 225b may be formed as, for example, a glass plate, a plastic plate, or polymer and may be transparently or translucently formed. According to an embodiment, the first transparent member 225a may be disposed to face the left eye of the user and the second transparent member 225b may be disposed to face the right eye of the user.

The lighting units 230a and 230b may be used differently depending on the position in which the lighting units 230a and 230b are attached. For example, the lighting units 230a and 230b may be attached in the vicinity of the rims 272a and 272b of the wearable electronic device 200. The lighting units 230a and 230b may be used as an auxiliary device for facilitating eye-gaze detection when the pupils are captured using the eye tracking cameras 270a and 270b. The lighting units 230a and 230b may use an IR LED with a visible light wavelength or an infrared light wavelength.

Alternatively, the lighting units 230a and 230b may be attached in the vicinity of a hinge (e.g., the first hinge 240a and the second hinge 240b) connecting the rims 272a and 272b and temples 271a and 271b corresponding to a leg portion of glasses of the wearable electronic device 200 or in the vicinity of a camera (e.g., the first recognition camera 265a, the second recognition camera 265b) mounted adjacent to the bridge 273 connecting the rims 272a and 272b. Here, the camera 265a, 265b may be, for example, a global shutter (GS) camera, but is not limited thereto.

If capturing is performed using a GS camera, the lighting units 230a and 230b may be used to supplement the surrounding brightness. For example, the lighting units 230a and 230b may be used in a dark environment or when it is not easy to detect a subject to be captured due to reflected light and combining of various light sources.

In an embodiment, the lighting units 230a and 230b may also be omitted. The lighting units 230a and 230b may be replaced by infrared pixels included in the first display 205 or the second display 210. In an embodiment, the lighting units 230a and 230b may be included in the wearable electronic device 200 to assist infrared pixels included in the first display 205, the second display 210.

A PCB (e.g., the first board 235a and the second board 235b) may be disposed in the temple 271a, 271b of the wearable electronic device 200 and may transmit an electrical signal to each module (e.g., a camera, a display, an audio device, or a sensor) and another PCB through a flexible printed circuit board (FPCB). According to various embodiments, at least one PCB may include the first board 235a, the second board 235b, and an interposer (not shown) disposed between the first board 235a and the second board 235b.

In an embodiment, a control circuit (not shown) for controlling components of the wearable electronic device 200 other than the first display 205, the second display 210 may be positioned on a PCB (e.g., the first board 235a, the second board 235b). The control circuit may control the components other than the first display 205, the second display 210 and perform an operation such as depth value estimation. The control circuit may include a communication circuit (e.g., the communication module 190 of FIG. 1) or a memory (e.g., the memory 130 of FIG. 1). The control circuit may control the first display 205, the second display 210, and/or the other components.

The hinge 240a or 240b may correspond to a portion connecting the temple 271a or 271b and the rim 272a or 272b of the wearable electronic device 200.

In an embodiment, the imaging camera 245 may be referred to as a "high resolution (HR)" camera or a "photo video (PV)" camera and may include a high-resolution camera. The imaging camera 245 may include a color camera having functions for obtaining a high-quality image, such as an automatic focus (AF) function and an optical image stabilizer (OIS). However, embodiments are not limited thereto, and the imaging camera 245 may include a GS camera or a rolling shutter (RS) camera.

In an embodiment, a plurality of microphones (e.g., the first microphone 250a, the second microphone 250b, and the third microphone 250c) may process an external acoustic signal into electrical audio data. The processed audio data may be variously utilized according to a function (or an application being executed) being performed by the wearable electronic device 200.

In an embodiment, a plurality of speakers (e.g., the first speaker 255a and the second speaker 255b) may output audio data that is received from a communication circuit (e.g., the communication module 190 of FIG. 1) or stored in a memory (e.g., the memory 130 of FIG. 1).

In an embodiment, one or more batteries 260 may be included and may supply power to the components constituting the wearable electronic device 200.

In an embodiment, the first recognition camera 265a and the second recognition camera 265b may include cameras used for three degrees of freedom (3DoF) and six degrees of freedom (6DoF) head tracking, hand detection and tracking, and gesture and/or space recognition. For example, the first recognition camera 265a and the second recognition camera 265b may each include a GS camera to detect movement of the head or hand and track the movement thereof. For example, a stereo camera may be used for head tracking and space recognition, and accordingly, two GS cameras with the same standard and performance may be used. An RS camera may be used to detect quick hand movement and minute movement of a finger and track movement thereof. In an embodiment, a GS camera having superior performance (e.g., image drag) in comparison to a camera may be mainly used. However, embodiments are not limited thereto. According to various embodiments, an RS camera may also be used. The first recognition camera 265a and the second recognition camera 265b may perform a simultaneous localization and mapping (SLAM) function through depth capturing and spatial recognition for 6DoF. In addition, the first recognition camera 265a and the second recognition camera 265b may perform a user gesture recognition function.

In an embodiment, at least one sensor (not shown, e.g., a gyro sensor, an acceleration sensor, a geomagnetic sensor, and/or a gesture sensor), the first recognition camera 265a, and the second recognition camera 265b may perform at least one of head tracking for 6DoF, pose estimation and prediction, gesture and/or space recognition, and a function of a SLAM through depth imaging.

In an embodiment, the first recognition camera 265a and the second recognition camera 265b may be classified and used as a camera for head tracking and a camera for hand tracking.

In an embodiment, the first eye tracking camera 270a and the second eye tracking camera 270b may detect and track the pupils. The first eye tracking camera 270a and the second eye tracking camera 270b may be used so that the center of a virtual image projected on the wearable electronic device 200 may be positioned according to the gaze directions of the pupils of a user wearing the wearable electronic device 200. For example, as the first eye tracking camera 270a and the second eye tracking camera 270b, a GS camera may be mainly used to detect a pupil and track fast pupil movement. The first eye tracking camera 270a may be installed to correspond to the left eye of the user, and the second eye tracking camera 270b may be installed to correspond to the right eye of the user. Here, the first eye tracking camera 270a and the second eye tracking camera 270b may have the same camera performance and specifications. However, embodiments are not limited thereto. The operation of an eye tracking camera (e.g., the first eye tracking camera 270a and the second eye tracking camera 270b) is described in more detail with reference to FIG. 3 below.

FIG. 3 is a diagram illustrating an operation of an eye tracking camera included in a wearable electronic device according to an embodiment. FIG. 3 illustrates a process in which an eye tracking camera 310 (e.g., the first eye tracking camera 270a, the second eye tracking camera 270b of FIG. 2) of a wearable electronic device 300 according to an embodiment tracks the eye 301 of the user, that is, the gaze of the user, using light (e.g., infrared light) output from a display 320 (e.g., the first display 205, the second display 210 of FIG. 2).

The eye tracking camera 310 may include the eye tracking sensor 315. The eye tracking sensor 315 may be included inside the eye tracking camera 310. The eye tracking sensor 315 may detect first reflected light that is generated when reflected infrared light 303 is reflected from the eye 301 of the user. The eye tracking camera 310 may track the eye 301 of the user, that is, the gaze of the user, based on a detection result of the eye tracking sensor 315.

The display 320 may include a plurality of visible light pixels and a plurality of infrared pixels. The visible light pixels may include R, G, and B pixels. The visible light pixels may output visible light corresponding to a virtual object image. The infrared pixels may output infrared light. The display 320 may include, for example, micro LEDs, or OLEDs.

The wearable electronic device 300 may perform gaze tracking using the infrared light output from the display 320. The projection lens 325 may be disposed between the display 320 and an input optical member 330 (e.g., the input optical members 220a and 220b of FIG. 2).

The infrared light output from the display 320 may be incident on the input optical member 330 through the projection lens 325 and may be separated into the reflected infrared light 303 and transmitted infrared light 305 by a half mirror (not shown) included in the input optical member 330.

The half mirror may be formed in the entire area or a partial area of the input optical member 330. When the half mirror is formed in the entire area of the input optical member 330, the input optical member 330 may also be referred to as a "half mirror". The half mirror may be disposed in the input optical member 330 of the display waveguide 350. The half mirror may be disposed inside or below the input optical member 330. The half mirror may include a grating structure.

The half mirror may output reflected infrared light and transmitted infrared light in response to the infrared light output from the display 320. The half mirror may include a grating structure. The grating structure may output reflected infrared light directly toward the eye 301 of the user by reflecting a portion of the output infrared light, or may output the reflected infrared light 303 toward the eye 301 of the user through the output optical member 340 by passing through the display waveguide 350. Also, the grating structure may output the transmitted infrared light 305 by transmitting another portion of the output infrared light.

The reflected infrared light 303 may be output directly toward the eye 301 of the user. The reflected infrared light 303 may be output toward the eye 301 of the user through the output optical member 340 by passing through the display waveguide 350. The transmitted infrared light 305 may be output toward the real world. The transmitted infrared light 305 may be incident on a real object and may be partially reflected from the real object.

The display waveguide 350 and the eye tracking waveguide 360 may be included in a transparent member 370 (e.g., the first transparent member 225a, the second transparent member 225b of FIG. 2). The transparent member 370 may be formed as, for example, a glass plate, a plastic plate, or polymer and may be transparently or translucently formed. The transparent member 370 may be disposed to face the eye of a user. In this case, a distance between the transparent member 370 and the eye 301 of the user may be referred to as an "eye relief" 380.

The transparent member 370 may include the display waveguide 350 and the eye tracking waveguide 360. The transparent member 370 may include the input optical member 330 and the output optical member 340. In addition, the transparent member 370 may include an eye tracking splitter 375 that splits the input light into several waveguides.

The display waveguide 350 is separate from the input optical member 330, as shown in FIG. 3. However, embodiments are not limited thereto. The input optical member 330 may also be included in the display waveguide 350.

In addition, the output optical member 340 is separate from the eye tracking waveguide 360, as shown in FIG. 3. However, embodiments are not limited thereto. The output optical member 340 may also be included in the eye tracking waveguide 360.

An optical waveguide (e.g., the display waveguide 350, the eye tracking waveguide 360) may output a virtual object image by adjusting a path of visible light. Visible light and infrared light output from the display 320 may be incident on the input optical member 330 through the projection lens 325. The visible light among the light incident on the input optical member 330 may be totally reflected through the display waveguide 350 to be guided to the output optical member 340. The visible light may be output from the output optical member 340 toward the eye 301 of the user.

The wearable electronic device 300 may reflect or transmit the infrared light output from the display 320 through the half mirror. In an embodiment, the wearable electronic device 300 may output the reflected infrared light 303 that is reflected by the half mirror (not shown) directly toward the eye 301 of the user, or may output the reflected infrared light 303 passing through the display waveguide 350 toward the eye 301 of the user. In an embodiment, the wearable electronic device 300 may output the transmitted infrared light 305 passing through the half mirror toward the real object. The reflectivity and the transmittance of the half mirror may be adjusted. For example, the half mirror may have a reflectivity of 30% (e.g., reflection toward the eyes of a user) and a transmittance of 70% (e.g., output toward a real object) with respect to infrared light. However, the reflectivity and the transmittance are only examples and may be adjusted in various ratios.

In an embodiment, the wearable electronic device 300 may output the reflected infrared light 303 toward the eyes of the user through the half mirror and the infrared pixels included in the display 320. The reflected infrared light 303 may be reflected from the eye 301 of the user, and the eye tracking sensor 315 may detect the reflected light. The display 320 including the infrared pixels and the half mirror included in the display waveguide 350 may be used instead of a separate infrared light source for detecting a real object. Since a separate infrared light source is not used, the wearable electronic device 300 may be lightened and power consumption may be reduced. In addition, the display 320 including the infrared pixels may function as an auxiliary light source to increase image quality of a stereo camera (e.g., the first recognition camera 265a and the second recognition camera 265b of FIG. 2) in a low-illuminance environment and increase the accuracy of depth information.

Alternatively, the wearable electronic device 300 may output infrared light through the display 320 and detect light reflected from the real object through a stereo camera (e.g., the first recognition camera 265a and the second recognition camera 265b of FIG. 2). The wearable electronic device 300 may estimate a distance to the real object based on a detection result. For example, the wearable electronic device 300 may measure a depth value or use a time of flight (ToF) scheme to estimate the distance to the real object.

The wearable electronic device 300 (e.g., the wearable electronic device 200 of FIG. 2) may provide AR to a user. The wearable electronic device 300 may provide an image representing the real world through the transparent waveguide 360, while transferring a virtual object image output from the display 320 toward the eyes of the user through the waveguide 350.

The wearable electronic device 300 may include, but is not limited to, for example, a head-mounted display (HMD), a face-mounted display (FMD), or a smart glass or a headset that provides extended reality such as AR, VR, or mixed reality.

According to an embodiment, the wearable electronic device 300 may output infrared light using the display 320 including the infrared pixels. The wearable electronic device 300 may track the gaze of a user using the infrared light output from the display 320. In addition, the wearable electronic device 300 may estimate a distance to a real object, using the infrared light output from the display 320.

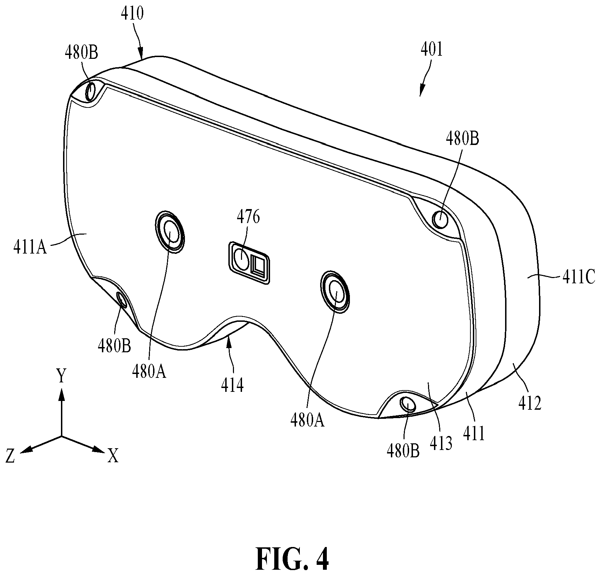

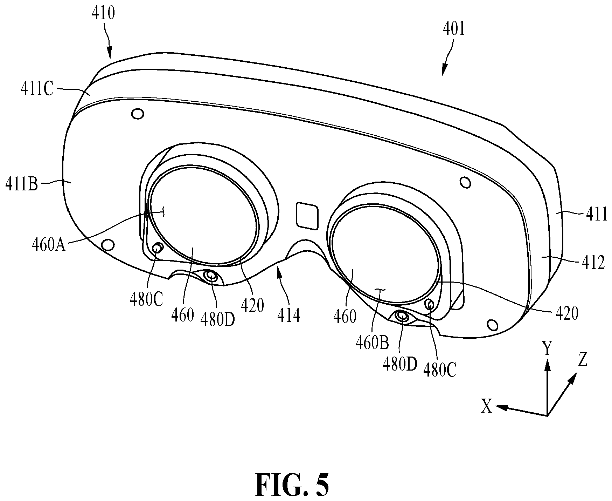

FIG. 4 is a front perspective view of a wearable electronic device according to an embodiment. FIG. 5 is a rear perspective view of a wearable electronic device according to an embodiment.

Referring to FIGS. 4 and 5, a wearable electronic device 401 (e.g., the electronic device 101 of FIG. 1) may be worn by a part of the body of a user and may provide a user interface. For example, the electronic device 401 may provide an experience of AR, VR, mixed reality, and/or extended reality to the user.

In an embodiment, the electronic device 401 may include a housing 410. The housing 410 may be configured to accommodate at least one component. The housing 410 may include a first surface 411A (e.g., a front surface), a second surface 411B (e.g., a rear surface) opposite to the first surface 411A, and a third surface 411C (e.g., a side surface) between the first surface 411A and the second surface 411B.

In an embodiment, the housing 410 may include a plurality of housing parts. For example, the housing 410 may include a first housing part 411 and a second housing part 412. The first housing part 411 may form the first surface 411A of the housing 410. The first housing part 411 may form at least a portion of the third surface 411C of the housing 410. The second housing part 412 may form the second surface 411B of the housing 410. The second housing part 412 may form at least a portion of the third surface 411C of the housing 410. In an embodiment, the second housing part 412 may face a part (e.g., the face) of the user's body. In an embodiment, the first housing part 411 may be detachably coupled to the second housing part 412. In an embodiment, the first housing part 411 and the second housing part 412 may be seamlessly connected to each other as one.

In an embodiment, the housing 410 may include a cover 413. The cover 413 may form the first surface 411A of the housing 410. The cover 413 may be configured to cover at least a portion of the first housing part 411.

In an embodiment, the housing 410 may include a bridge 414. The bridge 414 may be configured to face a part (e.g., the nose) of the user's body. For example, the bridge 414 may be supported by the nose of the user. The bridge 414 may be formed as at least one or any combination of the first housing part 411, the second housing part 412, and the cover 413.

In an embodiment, the electronic device 401 may include a lens structure 420. The lens structure 420 may include a plurality of lenses configured to adjust the focus of an image provided to a user. For example, the plurality of lenses may be configured to adjust the focus of an image output by a display 460. The plurality of lenses may be disposed on a position corresponding to a position of the display 460. The plurality of lenses may include, for example, a Fresnel lens, a pancake lens, a multichannel lens, and/or other appropriate lenses.

In an embodiment, the electronic device 401 may include the display 460 (e.g., the display module 160 of FIG. 1). The display 460 may be configured to provide an image (e.g., a virtual image) to a user. For example, the display 460 may include an LCD, a DMD, or an LCoS), an OLED), and/or a micro LED. In an embodiment, the display 460 may include a light source (not illustrated) configured to transmit an optical signal to a region where an image is output. In an embodiment, the display 460 may provide an image to a user by generating an optical signal by itself. In an embodiment, the display 460 may be disposed on the second surface 411B of the housing 410. In an embodiment, the display 460 may be disposed on the second housing part 412. In an embodiment, the display 460 may include a first display area 460A and a second display area 460B. The first display area 460A may be disposed to face the left eye of a user. The second display area 460B may be disposed to face the right eye of the user. In an embodiment, the first display area 460A and the second display area 460B may include glass, plastic, and/or polymer. In an embodiment, the first display area 460A and the second display area 460B may include a transparent material or a translucent material. In an embodiment, the first display area 460A and the second display area 460B may form a single display area. In an embodiment, the first display area 460A and the second display area 460B may form a plurality of display areas.

In an embodiment, the electronic device 401 may include a sensor 476 (e.g., the sensor module 176 of FIG. 1). The sensor 476 may be configured to sense the depth of a subject. The sensor 476 may be configured to transmit a signal to the subject and/or receive a signal from the subject. For example, a transmission signal may include a near infrared ray, an ultrasonic wave, and/or a laser. The sensor 476 may be configured to measure a ToF of a signal to measure a distance between the electronic device 401 and the subject. In an embodiment, the sensor 476 may be disposed on the first surface 411A of the housing 410. In an embodiment, the sensor 476 may be disposed on the central portion of the cover 413 and/or the first housing part 411.

In an embodiment, the electronic device 401 may include a plurality of first cameras 480A (e.g., the camera module 180 of FIG. 1). The plurality of first cameras 480A may be configured to obtain an image from a subject. One of the plurality of first cameras 480A may be disposed on a first region (e.g., a portion in the -X direction in FIG. 2) of the first surface 411A of the housing 410 and another one of the plurality of first cameras 480A may be disposed on a second region (e.g., a portion in the +X direction in FIG. 2) of the first surface 411A of the housing 410, wherein the second region is different from the first region. The plurality of first cameras 480A may be disposed on both sides of the sensor 476. The plurality of first cameras 480A may include an image stabilizer actuator (not illustrated) and/or an autofocus actuator (not illustrated). For example, the plurality of first cameras 480A may include at least one or any combination of a camera configured to obtain a color image, a GS camera, and an RS camera.

In an embodiment, the electronic device 401 may include a plurality of second cameras 480B (e.g., the first camera module 180 of FIG. 1). The plurality of second cameras 480B may be configured to recognize a subject. The plurality of second cameras 480B may be configured to detect and/or track a space or a 3 DoF or 6 DoF object (e.g., the head or hand of the human body). For example, the plurality of second cameras 480B may include a GS camera. The plurality of second cameras 480B may be configured to perform SLAM using depth information of a subject. The plurality of second cameras 480B may be configured to recognize a gesture of a subject. In an embodiment, the plurality of second cameras 480B may be disposed on the first surface 411A of the housing 410. In an embodiment, the plurality of second cameras 480B may be disposed on corner regions of the cover 413 and/or the first housing part 411.

In an embodiment, the electronic device 401 may include a plurality of third cameras 480C (e.g., the first camera module 180 of FIG. 1). The plurality of third cameras 480C may be configured to detect and track the pupils of a user. Position information on the eyes of the user may be used to move the center of an image displayed on the display 460 in a direction in which the pupils of the user gaze. For example, the plurality of third cameras 480C may include a GS camera. One of the plurality of third cameras 480C may be disposed to correspond to the left eye of a user and another one of the plurality of third cameras 480C may be disposed to correspond to the right eye of the user.

In an embodiment, the electronic device 401 may include a plurality of fourth cameras 480D (e.g., the first camera module 180 of FIG. 1). The plurality of fourth cameras 480D may be configured to recognize the face of the user. For example, the plurality of fourth cameras 480D may be configured to detect and track a facial expression of the user.

In an embodiment that is not illustrated, the electronic device 401 may include a microphone (e.g., the input module 150 of FIG. 1), a speaker (e.g., the sound output module 155 of FIG. 1), a battery (e.g., the battery 189 of FIG. 1), an antenna (e.g., the antenna module 197 of FIG. 1), a sensor (e.g., the sensor module 176 of FIG. 1), and/or an arbitrary component that is suitable for the electronic device 401.

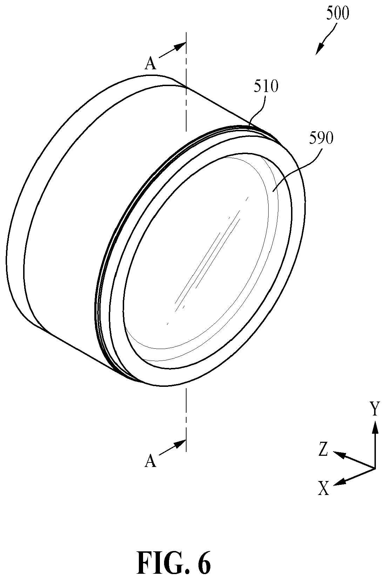

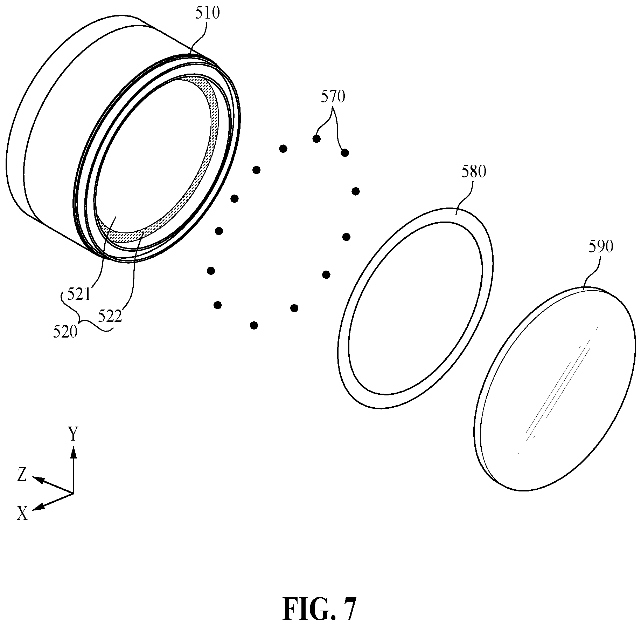

FIG. 6 is a rear perspective view of a lens assembly according to an embodiment and FIG. 7 is an exploded perspective view of the lens assembly according to an embodiment.

Referring to FIGS. 6 and 7, a lens assembly 500 may be provided at a wearable electronic device (e.g., the wearable electronic device 401 of FIG. 4). The lens assembly 500 may be provided at a housing (e.g., the housing 410 of FIG. 4) of the wearable electronic device (e.g., the wearable electronic device 401 of FIG. 4). Herein, a housing that supports the lens assembly 500 may be referred to as a main housing. A pair of lens assemblies 500 may be provided. When a user wears the wearable electronic device, one of the pair of lens assemblies 500 may be positioned in front of the left eye of the user and the other lens assembly may be positioned in front of the right eye of the user. The lens assembly 500 may include a camera (e.g., the first camera 480A of FIG. 4), a lens structure (e.g., the lens structure 420 of FIG. 5), and a display (e.g., the display 460 of FIG. 5). Referring to FIGS. 4 and 5, illustrated is that the display of the lens assembly is located at the rear side of the wearable electronic device. However, the example is not limited thereto. For example, the display may be positioned in front of the wearable electronic device. For reference, in the lens assembly 500 described below, the display may be positioned in front of the plurality of lenses. For example, the display may be positioned in the +Z direction compared to the plurality of lenses.

The lens assembly 500 may have a pillar shape having a hollow inside. The lens assembly 500 may include a display, a lens housing 510, a plurality of lenses, a light-emitting element 570, tape 580, and a cover window 590. The display, the plurality of lenses, and the cover window 590 may be connected to the lens housing 510. The display may be positioned on the front side compared to the plurality of lenses. Light irradiated from the display may pass through the plurality of lenses and may reach the pupil of the user.

The light-emitting element 570 may irradiate light rearward. For example, the light-emitting element 570 may irradiate light in the -Z direction. The light-emitting element 570 may assist various cameras (e.g., the third camera 480C and the fourth camera 480D of FIG. 5) to better detect and track the pupil of the user by irradiating light to the pupil of the user. For example, the light-emitting element 570 may express R, G, and B by emitting light by itself and because of its small size (e.g., less than or equal to 100 *µ*m), a single chip may implement a single pixel (e.g., one of R, G, and B). Accordingly, when the display 460 is implemented as a micro-LED, high resolution may be provided without a BLU. However, the example is not limited thereto. A single pixel may include R, G, and B and a single chip may be implemented by a plurality of pixels including R, G, and B.

The light-emitting element 570 may be disposed on one of the plurality of lenses, rather than the lens housing 510. For example, the light-emitting element 570 may be disposed on a first lens 520. The light-emitting element 570 may be disposed on an edge part of the first lens 520. The light-emitting element 570 may be disposed on the rear surface of the first lens 520.

The first lens 520 may include a front surface, which is a surface facing a lens relatively positioned forward, and a rear surface that is provided at an opposite side of the front surface and faces rearward. The rear surface of the first lens 520 may face an eye of the user. For example, a normal of the rear surface of the first lens 520 may be oriented in the rear direction. The rear surface of the first lens 520 may include a central part 521 that is a region through which light irradiated from the display passes and an edge part 522 positioned at an outer side of the central part 521. The edge part 522 may support the light-emitting element 570. The edge part 522 may have a ring shape. A plurality of light-emitting elements 570 may be provided. The plurality of light-emitting elements 570 may be spaced part from each other along the edge part 522. At least four light-emitting elements 570 may be provided. For example, based on the center of the lens, at least one of the plurality of light-emitting elements 570 may be respectively provided at the upper side, the lower side, the left side, and the right side. As described above, when at least four light-emitting elements are provided, the plurality of light-emitting elements 570 may more precisely sense the eye of the user.

The edge part 522 of the rear surface of the first lens 520 may be a dead zone that does not correspond to a light path and may support the light-emitting element 570. As the first lens 520 supports the light-emitting element 570 using the dead zone, the lens assembly 500 may have a compact structure. The lens housing 510 may not need to provide a separate space for supporting the light-emitting element 570.

The tape 580 may cover the light-emitting element 570. The tape 580 may be positioned at the rear side of the light-emitting element 570. The tape 580 may cover the plurality of light-emitting elements 570 at once. The tape 580 may have a ring shape. The tape 580 may occlude the shape of the light-emitting element 570 yet may allow light irradiated from the light-emitting element 570 to pass. According to the shape described above, when the user gazes the lens assembly 500, the light-emitting element 570 may be prevented from being exposed to the user.

The cover window 590 may cover the light-emitting element 570 and the tape 580. The cover window 590 may be formed of a transparent material. The cover window 590 may prevent inflow of moisture and/or a foreign material to the light-emitting element 570 or the tape 580.

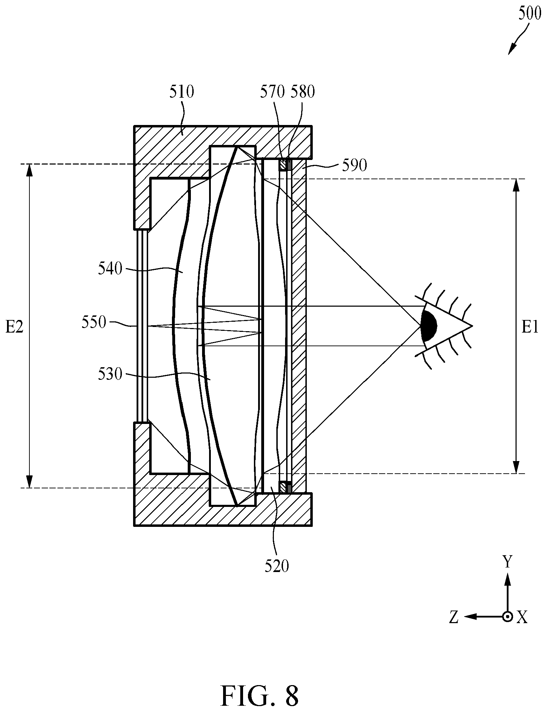

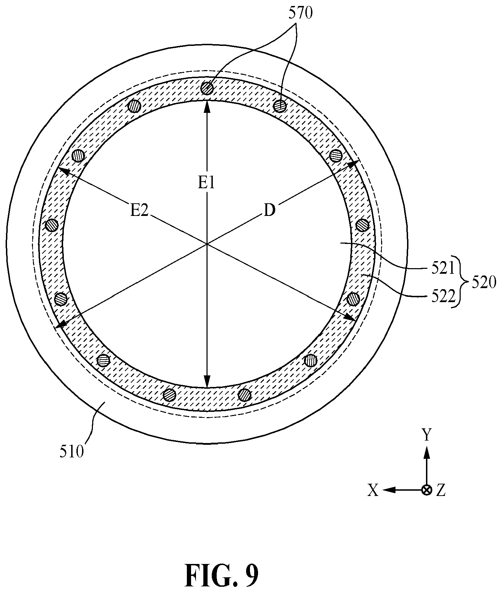

FIG. 8 is a cross-sectional view taken along a line A-A of FIG. 6 and FIG. 9 is a rear view of a first lens, a lens housing, and a light-emitting element according to an embodiment.

Referring to FIGS. 8 and 9, the lens assembly 500 may include the lens housing 510, the first lens 520, a second lens 530, a third lens 540, a display 550, the light-emitting element 570, the tape 580, and the cover window 590.

The lens housing 510 may include a hollow therein. The lens housing 510 may be connected to the main housing (e.g., the housing 410 of FIG. 4). The lens housing 510 may support internal components in various sizes. For example, the internal shape of the lens housing 510 may be determined by the size of internal components to be supported.

The first lens 520 may support the light-emitting element 570. The first lens 520 may include a front surface facing the second lens 530 and a rear surface facing the cover window 590. The front surface and the rear surface thereof may include effective diameters, respectively. In this case, the effective diameter may be a diameter corresponding to a region through which light passes. The first lens 520 may be positioned rearwardly (e.g., the -Z direction) compared to the second lens 530.

The rear surface of the cover window 590 may include the central part 521 and the edge part 522. The central part 521 may be a region through which light irradiated from the display 550 passes. The edge part 522 may be a region through which light irradiated from the display 550 does not pass. The edge part 522 of the rear surface may not function as a lens. As the lens assembly 500 supports the light-emitting element 570 through the edge part 522 of the rear surface, a compact structure may be implemented.

A first effective diameter E1 that is a diameter of the central part 521 may be less than a second effective diameter E2 that is a diameter of a region through which light passes of the front surface. The second effective diameter E2 may be less than an outer diameter D of the first lens 520. A difference between the size of the first effective diameter E1 and the size of the second effective diameter E2 may be greater than 1 mm. The second effective diameter E2 may be greater than the first effective diameter E1 by 1 mm or more. The size of the central part 521 may be less than the size of the front surface. The edge part 522 may have a ring shape.

The second lens 530 may be connected to the lens housing 510. The second lens 530 may have a greater diameter than the first lens 520.

The third lens 540 may be positioned in front of the second lens 530. The third lens 540 may adjust a path of light irradiated from the display 550 to the second lens 530. The third lens 540 may be disposed between the second lens 530 and the display 550.

The display 550 may be connected to the lens housing 510. The display 550 may irradiate light. The display 550 may irradiate light rearward. The light irradiated from the display 550 may pass through a plurality of lenses and may reach the pupil of a user.

The light irradiated from the display 550 may be refracted as the light passes through the third lens 540. The light that passes through the third lens 540 may be refracted again as the light passes through the second lens 530. The light that passes through the second lens 530 may be reflected off the front surface of the first lens 520 and may be directed back to the second lens 530. The light directed back to the second lens 530 may be reflected off the front surface of the second lens 530 again and may be directed to the first lens 520. The light directed to the first lens 520 may be refracted again and may pass through the central part 521 of the first lens 520. The light that passes through the central part 521 may be directed to the pupil of the user.

The light-emitting element 570 may be disposed on the first lens 520. The light-emitting element 570 may irradiate light to the pupil of the user. The light-emitting element 570 may be positioned in a region, in the first lens 520, where the light irradiated from the display 550 does not reach. A plurality of light-emitting elements 570 may be provided along the edge part of the first lens 520. Although 13 light-emitting elements 570 are illustrated, the number of light-emitting elements is not limited thereto.

The tape 580 may cover the light-emitting element 570. The tape 580 may not expose the shape of the light-emitting element 570 to the outside, however, may allow the light irradiated from the light-emitting element 570 to pass. The tape 580 may have a ring shape. The inner diameter of the tape 580 may be greater than the first effective diameter E1. According to the shape described above, the tape 580 may not obstruct the path of light irradiated from the display 550.

The cover window 590 may be connected to the lens housing 510. The cover window 590 may protect the light-emitting element 570 and the tape 580 from inflow of moisture and/or a foreign material.

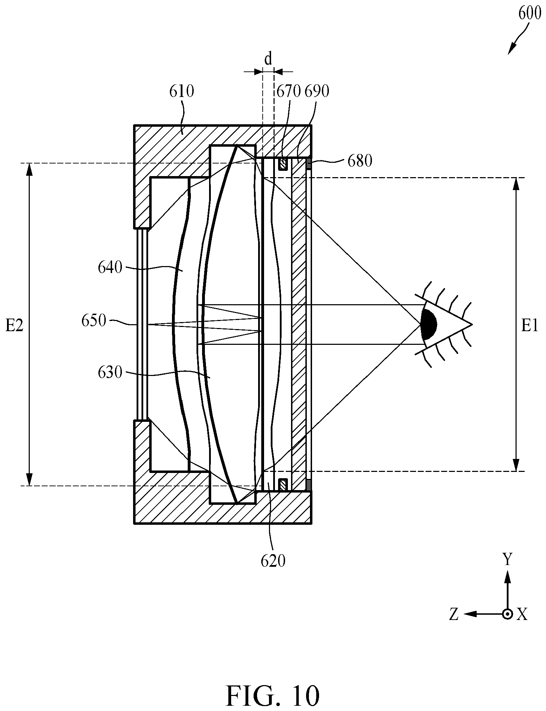

FIG. 10 is a cross-sectional view of a lens assembly according to an embodiment.

Referring to FIG. 10, a lens assembly 600 may include a lens housing 610, a first lens 620, a second lens 630, a third lens 640, a display 650, a light-emitting element 670, tape 680, and a cover window 690.

The light-emitting element 570 may be disposed on the lens housing 610. For example, the light-emitting element 670 may be attached to the lens housing 610. The light-emitting element 670 may be provided at a position apart from the first lens 620. For example, the light-emitting element 670 may be provided at a position apart from a rear surface of the first lens 620 by a distance d.

The first lens 620 may include a front surface facing the second lens 630 and a rear surface facing the cover window 690. The front surface and the rear surface may include effective diameters, respectively. In this case, the effective diameter may be a diameter corresponding to a region through which light passes. The first lens 620 may be positioned rearwardly (e.g., the -Z direction) compared to the second lens 630.

A first effective diameter E1, which is a diameter of a central part of the first lens 620, may be less than a second effective diameter E2, which is a diameter of a region through which light passes in the front surface. The second effective diameter E2 may be less than an outer diameter D of the first lens 620. A size difference between the first effective diameter E1 and the second effective diameter E2 may be greater than 1 mm. The second effective diameter E2 may be greater than the first effective diameter E1 by 1 mm or more. The edge part 522 of the first lens 620 may have a ring shape.

The light-emitting element 570 may be provided at a position overlapping a portion, through which light does not pass, of the rear surface of the first lens 620, that is, the edge part 522. For example, the light-emitting element 570 may overlap the edge part 522 based on a direction in which the plurality of lenses 620, 630, and 640 is disposed, in other words, in the z-axis direction.

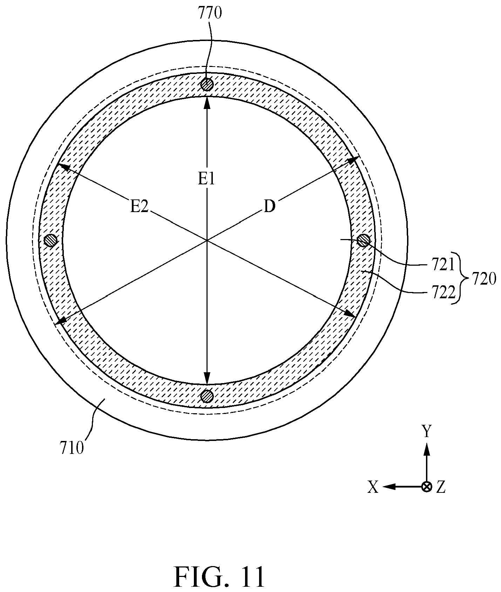

FIG. 11 is a rear view of a first lens, a lens housing, and a light-emitting element according to an embodiment.

Referring to FIG. 11, a first lens 720 may be provided inside a lens housing 710. The first lens 720 may include a central part 521 and an edge part 522. A light-emitting element 770 may be provided at a position overlapping the edge part 522.

For example, at least four light-emitting elements 770 may be provided. For example, the light-emitting element 770 disposed at the +y side may irradiate light to a relatively upper portion of the pupil of a user. For example, the light-emitting element 770 disposed at the -y side may irradiate light to a relatively lower portion of the pupil of the user. For example, the light-emitting element 770 disposed at the +x side may irradiate light to a relatively left portion of the pupil of the user. For example, the light-emitting element 770 disposed at the -x side may irradiate a relatively right portion of the pupil of the user.

In an embodiment, the wearable electronic device 200 worn on the head of a user may include the main housing 401 and the lens assembly 500 arranged in the main housing 401 and disposed in front of an eye of the user, wherein the lens assembly 500 may include the lens housing 510 connected to the main housing, the first lens including a rear surface facing the eye of the user and a front surface provided on an opposite side of the rear surface, wherein the first lens 520 is connected to the lens housing, the second lens positioned forwardly compared to the first lens and connected to the lens housing, the display 550 connected to the lens housing, positioned forwardly compared to the second lens, and irradiating light in a direction toward the second lens, and at least one the light-emitting element 570 arranged on at least one of the first lens and the lens housing, provided at a position overlapping a region where the light irradiated from the display does not reach in the first lens, and irradiating light to a pupil of the user to sense movement of the pupil of the user.

In an embodiment, the rear surface may include the central part 521 that is a region through which the light passes and the edge part 522 positioned at an outer side of the central part and supporting the light-emitting element.

In an embodiment, the first effective diameter E1 that is a diameter of the central part 521 may be less than the second effective diameter E2 that is a diameter of the region through which the light passes in the front surface.

In an embodiment, the difference between the size of the first effective diameter E1 and the size of the second effective diameter E2 may be greater than or equal to 1 mm.

In an embodiment, the lens assembly may further include tape 580 positioned at a rear of the light-emitting element and covering the light-emitting element.

In an embodiment, the tape 580 may include a ring shape.

In an embodiment, the inner diameter of the tape 580 may be greater than the first effective diameter.

In an embodiment, the lens assembly may further include the cover window 590 connected to the lens housing and covering the light-emitting element and the tape.

In an embodiment, the size of the central part 521 may be less than the size of the front surface.

In an embodiment, the edge part 522 may include a ring shape.

In an embodiment, the plurality of light-emitting elements 570 may be provided such that the light-emitting elements may be spaced apart from each other along the edge part.

In an embodiment, the light-emitting element 570 may be spaced apart from the lens housing.

In an embodiment, the diameter of the second lens 530 may be greater than the diameter of the first lens.

In an embodiment, the lens assembly may further include the third lens 540 disposed between the second lens and the display and connected to the lens housing.

In an embodiment, the diameter of the cover lens may be less than the diameter of the second lens.

In an embodiment, the lens assembly 500 may include the lens housing 510, the first lens including a rear surface facing an eye of a user and a front surface provided on an opposite side of the rear surface, wherein the first lens is connected to the lens housing, the second lens positioned forwardly compared to the first lens and connected to the lens housing, the display 550 connected to the lens housing, positioned forwardly compared to the second lens, and irradiating light in a direction toward the second lens, and at least one light-emitting element 570 arranged on at least one of the first lens and the lens housing, provided at a position overlapping a region where the light irradiated from the display does not reach in the first lens, and irradiating light to a pupil of the user to sense movement of the pupil of the user.

In an embodiment, the rear surface may include the central part 521 that is a region through which the light passes and the edge part 522 positioned at an outer side of the central part and supporting the light-emitting element.

In an embodiment, the first effective diameter E1 that is a diameter of the central part 521 may be less than the second effective diameter E2 that is a diameter of the region through which the light passes in the front surface.

In an embodiment, the lens assembly may further include tape 580 attached to the rear surface and covering the light-emitting element.

In an embodiment, the wearable electronic device 200 worn on a head of a user may include the main housing 401, and the lens assembly 500 arranged in the main housing 401 and disposed in front of an eye of the user, wherein the lens assembly 500 may include the lens housing 510 connected to the main housing, the first lens including a rear surface facing an eye of the user and a front surface provided on an opposite side of the rear surface, wherein the first lens is connected to the lens housing, the second lens positioned forwardly compared to the first lens and connected to the lens housing, the display 550 connected to the lens housing, positioned forwardly compared to the second lens, and irradiating light in a direction toward the second lens, and at lest one light-emitting element 570 arranged on at least one of the first lens and the lens housing, provided at a position overlapping a region where the light irradiated from the display does not reach in the first lens, and irradiating light to a pupil of the user to sense movement of the pupil of the user. The rear surface may include the central part that is a region through which the light passes, and the edge part positioned at an outer side of the central part and supporting the light-emitting element.

The embodiments of the present disclosure are intended to be illustrative and not restrictive.

Various modifications may be made to the detailed description of the present disclosure including the accompanying scope of claims and equivalents. Any of the embodiment(s) described herein may be used in combination with any other embodiment(s) described herein.

## Claims

1. A wearable electronic device 200 configured to be worn on a head of a user, the wearable electronic device comprising:
a main housing 401; and
a lens assembly 500 arranged in the main housing 401, the lens assembly 500 comprising:
a lens housing 510 disposed at to the main housing;
a first lens 520 disposed in the lens housing and having a rear surface facing in a direction toward an eye of the user when the wearable device is worn on the head of the user and a front surface on an opposite side of the rear surface;
a second lens 530 disposed in the lens housing behind the first lens 520 with respect to the eye of the user;
a display 550 disposed in the lens housing behind the second lens with respect to the eye of the user and configured to emit light toward the second lens; and
a plurality of light-emitting elements 570 arranged on at least one of the first lens and the lens housing, provided at a position overlapping a region of the front surface of the first lens where the light emitted by the display does not reach, and irradiating light to the eye of the user for sensing movement of the eye of the user.

2. The wearable electronic device of claim 1, wherein the rear surface comprises:
a central part 521 that is a region through which the light passes; and
an edge part 522 positioned at an outer side of the central part and supporting the light-emitting element.

3. The wearable electronic device of claim 2, wherein a first effective diameter E1 that is a diameter of the central part 521 is less than a second effective diameter E2 that is a diameter of the region through which the light passes in the front surface.

4. The wearable electronic device of claim 3, wherein a difference between a size of the first effective diameter E1 and a size of the second effective diameter E2 is greater than or equal to 1 mm.

5. The wearable electronic device of claim 3, wherein the lens assembly further comprises tape 580 positioned at a rear of the light-emitting element and covering the light-emitting element.

6. The wearable electronic device of claim 5, wherein the tape 580 comprises a ring shape.

7. The wearable electronic device of claim 6, wherein an inner diameter of the tape 580 is greater than the first effective diameter.

8. The wearable electronic device of claim 5, wherein the lens assembly further comprises a cover window 590 connected to the lens housing and covering the light-emitting element and the tape.

9. The wearable electronic device of claim 2, wherein a size of the central part 521 is less than a size of the front surface.

10. The wearable electronic device of claim 2, wherein the edge part 522 comprises a ring shape.

11. The wearable electronic device of claim 2, wherein at least four light-emitting elements 570 are provided such that the four light-emitting elements are spaced apart from each other along the edge part.

12. The wearable electronic device of claim 1, wherein the light-emitting element 570 is spaced apart from the lens housing.

13. The wearable electronic device of claim 1, wherein a diameter of the second lens 530 is greater than a diameter of the first lens.

14. The wearable electronic device of claim 1, wherein the lens assembly further comprises a third lens 540 disposed between the second lens and the display and connected to the lens housing.

15. The electronic device of claim 14, wherein the diameter of the third lens is less than a diameter of the second lens.
